**Europäisches Patentamt**

**European Patent Office**

**Office européen des brevets**

(11) Veröffentlichungsnummer: **0 421 088 A2**

# (12) EUROPÄISCHE PATENTANMELDUNG

(21) Anmeldenummer: **90115302.3**

(22) Anmeldetag: **09.08.90**

(51) Int. Cl.5: **B29C 45/67**

(30) Priorität: **06.10.89 DE 3933348**

(43) Veröffentlichungstag der Anmeldung:
**10.04.91 Patentblatt 91/15**

(84) Benannte Vertragsstaaten:
**AT DE ES FR IT NL**

(71) Anmelder: **Klöckner Ferromatik Desma GmbH**
**Riegeler Strasse 4**
**W-7831 Malterdingen(DE)**

(72) Erfinder: **Der Erfinder hat auf seine Nennung verzichtet**

(74) Vertreter: **Röther, Peter, Dipl.-Phys.**
**Patentabteilung, Klöckner-Werke AG,**
**Klöcknerstrasse 29**
**W-4100 Duisburg 1(DE)**

(54) Formschliessvorrichtung für eine Spritzgiessmaschine.

(57) Die Erfindung betrifft eine Formschließvorrichtung für eine Spritzgießmaschine mit mindestens einer Spritzform, wobei jeweils eine erste Spritzformhälfte an einer ersten ortsfesten und eine zweite Spritzformhälfte an einer auf mindestens zwei Holmen zwischen der ersten ortsfesten und einer zweiten ortsfesten Platte bewegbaren Formträgerplatte mittels mindestens einer langhubigen Fahrzylinder-Kolben-Einrichtung zum schnellen Öffnen und Schließen der betreffenden Spritzformhälften verschiebbar und die betreffenden Spritzformhälften unter hohem Druck mittels einer kurzhubigen Druckkissen-Einrichtung schließbar sind und mit radial zur Längsachse des Presskolbens der Druckkissen-Einrichtung bewegbaren Kopplungsriegeln.

Um die Formschließvorrichtung konstruktive zu vereinfachen, ferner dahingehend zu verbessern, daß die Zykluszeiten der Spritzvorgänge und die beim Schließen und Öffnen der Spritzformhälften aufzuwendenden Energien minimiert werden, wird vorgeschlagen, daß der Zylinder der Druckkissen-Einrichtung an oder in der zweiten ortsfesten Platte angeordnet und der Kolben der Druckkissen-Einrichtung einen Ringkolben mit mindestens einer Ausnehmung in seinem Innenmantel ist, daß in dem Kolbenhohlraum eine mit der beweglichen Formträgerplatte fest verbundene Stange axial beweglich gelagert ist, die radial in die Ausnehmung(en) ein- bzw. ausschwenkbare Kopplungsriegel aufweist.

## FORMSCHLIESSVORRICHTUNG FÜR EINE SPRITZGIESSMASCHINE

Die Erfindung betrifft eine Formschließvorrichtung für eine Spritzgießmachine mit mindestens einer Spritzform, wobei jeweils eine erste Spritzformhälfte an einer ersten ortsfesten und eine zweite Spritzformhälfte an einer auf mindestens zwei Holmen zwischen der ersten ortsfesten und einer zweiten ortsfesten Platte bewegbaren Formträgerplatte mittels mindestens einer langhubigen Fahrzylinder-Kolben-Einrichtung zum schnellen Öffnen und Schließen der betreffenden Spritzformhälften verschiebbar und die betreffenden Spritzformhälften unter hohem Druck mittels einer kurzhubigen Druckkissen-Einrichtung schließbar sind und mit radial zur Längsachse des Presskolbens der Druckkissen-Einrichtung bewegbaren Kopplungsriegeln.

Vorrichtungen zum aufeinanderfolgenden Bewegen eines hochbelastbaren Stempels zum Beispiel in Form einer Schließeinheit für Kunststoff-Spritzgießmaschinen oder einer hydraulischen Presse, die es ermöglichen, den Stempel über einen Teil seines Weges mit großer Geschwindigkeit bei geringer Vorschubkraft bzw. mit kleiner Geschwindigkeit bei hoher Vorschubkraft zu bewegen, sind seit langem nach dem Stand der Technik bekannt. So wurden zum Beispiel zum Antrieb der Stempel von hydraulischen Pressen häufig Stufenkolben verwendet, die eine Unterteilung des Gesamthubes zwischen einem im Eilgang - durch Beaufschlagung nur der kleinen Kolbenfläche - bzw. mit langsamerem Vorschub und erhöhter Presskraft - bei Beaufschlagung der gesamtem Kolbenfläche - aufweisen. Zum Betätigen der Schließeinheit bei Kunststoff-Spritzgießmaschinen werden für den gleichen Zweck vielfach Kniehebel-Antriebe benutzt, die bei gleichförmiger Winkelgeschwindigkeit der Kniehebel selbsttätig ein starkes Ansteigen der auf den Stempel wirkenden Schließkraft mit Annäherung der Kniehebel an die Strecklage bewirken. Die hauptsächlichen Nachteile eines solchen Kniehebel-Antriebes für die Stempel bestehen darin, daß die Endstellung der Werkzeugaufnahmefläche für jede Form genau einjustiert werden muß und sich der Stempel-Hub für eine konstruktiv festliegende Länge der Kniehebel nur in sehr engen Grenzen verändern läßt.

Es ist zur Vereinfachung der Vorrichtung bereits in der DE-OS 17 29 314 vorgeschlagen worden, neben hydraulischen Arbeitxzylindern mit großem Hub und kleinem Querschnitt für den Eilgang des Stempels in Arbeits- und Rücklaufrichtung eine mit einem Stempel über einen weiteren hydraulischen Arbeitszylinder mit großem Querschnitt und kleinem Hub verbundene Arbstützstange vorzusehen, die während des Eilgangs in einem festen Widerlager geführt ist. Kurz vor der Stellung des Stempels, von der ab eine Erhöhung der Vorschubkraft für das Schließen der Spritzform erforderlich ist, wird die bis zu diesem Zeitpunkt geöffnete und daher ein kraftloses Mitbewegen der Abstützstange für den Stempel ermöglichende Verriegelungseinrichtung zwischen der Abstützstange und dem festen Widerlager selbsttätig geschlossen und unmittelbar darauf der zwischen die Abstützstange und dem Stempel eingeschaltete Arbeitszylinder mit großem Kolbenquerschnitt mit Druckflüssigkeit beaufschlagt, so daß der Stempel auf dem letzten nur sehr kurzen Teilstück seines Gesamtweges mit wesentlich erhöhter Vorschubkraft und entsprechend verringerter Geschwindigkeit in seine Endstellung bewegt wird. Als Ausführungsbeispiel für die Verriegelungseinrichtung werden mindestens zwei in radialer Richtung zur Abstützstange beweglich am Widerlager geführte Backen vorgeschlagen, die mit vorzugsweise mehreren in gleichmäßigen Abständen an der Abstützstange angeordneten quer zu ihrer Längsrichtung verlaufenden Nuten zusammenwirken. Der Nachteil dieser Vorrichtung liegt jedoch in den langen Umsteuerzeiten für das Druckmittel.

In der DE-AS 20 20 880 wird eine gattungsgemäße Formschließvorrichtung beschrieben, bei der zur Kraftübertragung an der beweglichen Formträgerplatte eine Druckspindel befestigt ist, welche in eine Bohrung des Presskolbens einfahrbar ist. Zur mechanischen Kraftkopplung zwischen dem Presshubkolben und der Druckspindel werden zwei Druckringhälften eingefahren, so daß deren kegelmantelförmige Stirnfläche gegen eine entsprechend ausgebildete kegelstumpfförmige Anlagefläche an der Stirnseite der Druckspindel zur Anlage kommt. Auf diese Weise erfolgt eine senkrechte Kraftübertragung vom Presshubkolben auf die Druckspindel.

Es ist auch schon vorgeschlagen worden, die Formaufspannplatten über Rigelholme unmittelbar miteinander zu verspannen. Hierzu sind vier hohlgebohrte Rigelholme vorgesehen, in deren Bohrungen Hilfskolben für die Schließ- und Öffnungsbewegung laufen. Sobald die Holme eingefahren und die Form in Schließstellung gebracht ist, wird eine in Ringnuten der Holme eingreifende mechanische Verriegelung hydraulisch betätigt. Die nun als Kolben wirkenden Verriegelungselemente werden über als Druckkissen wirkende Zwischenringe hydraulisch mit hohem Druck beaufschlagt und spannen die Holme unter Entwicklung der Formzuhaltekraft.

In der DE-OS 21 02 725 wird zur Minimierung des technischen Aufwandes vorgeschlagen, die jeweilige Verriegelungsvorrichtung mit Keilverriegelungsflächen zu versehen, die mit in einem Arbeitsgang mit der Verriegelung zugleich die Schließ- und Zuhaltekraft aufbringendem Spanndruck verriegelbar sind. Dies hat den Vorteil, daß die Riegelholme massiv ausgebildet werden können. Sie werden mit einem Gewinde versehen, mittels dem sie über Spannmuttern gegenüber ihrer Formaufspannplatte längeneinstellbar sind. An ihrem freien Ende besitzen die Riegelholme Ringnuten, die in Verriegelungsvorrichtungen der feststehenden Formaufspannplatte, z.B. Keilen zusammenwirken. Die Verriegelungsvorrichtung soll Keilverriegelungsflächen aufweisen, die mit in einem Arbeitsgang mit der Verriegelung zugleich die Schließ- und Zuhaltekraft aufbringendem Spanndruck verriegelbar sind. Allerdings sind die hiermit erzeugbaren Spannkräfte relativ gering.

Die DE-OS 34 34 863 geht schließlich von einem Schließmechanismus einer Spritzgießmaschine mit einem hydraulisch beaufschlagten Zylinder-Kolbensatz aus, der zwei Teilhübe durchführt, von denen der erste schneller durchfahren wird als der zweite, mit einem axial in den Zylinderraum und den Kolben ragenden Verdrängungsrohr, das an einer Stirnwand des Zylinders befestigt und am ausfahrseitigen Ende des Verdrängungsbereiches offen ist. Um den Strömungsquerschnitt für die Nachsaugleitungen klein halten und auf einen Öltank über dem Zylinder verzichten zu können, wird vorgeschlagen, daß der Kolben, dessen Hub unabhängig von der Höhe des Spritzwerkzeuges gleichbleibend ist, einen Kniehebelmechanismus betätigt, und daß die maximale Überlappunslänge des Verdrängungsbereiches des Verdrängungsrohres mit dem Kolben dem ersten Teilhub des Kolben entspricht, wobei das Verdrängungsrohr ein Saugventil an einen Öltank oder dergleichen angeschlossen ist.

In der DE-OS 37 15 160 ist darüber hinaus auch beschrieben, daß die aufzubringende Schließkraft entsprechend dem gewählten Formeninnendruck mittel eines Elektromagneten erzeugt wird, welcher im stromdurchflossenen Zustand eine zur Form gerichtete Kraft auf den Druckstempel ausübt.

Es ist Aufgabe der vorliegenden Erfindung, die eingangs genannte Formschließvorrichtung konstruktiv zu vereinfachen, ferner dahingehend zu verbessern, daß die Zykluszeiten der Spritzvorgänge und die beim Schließen und Öffnen der Spritzformhälften aufzuwendenden Energien minimiert werden.

Diese Aufgabe wird durch die im Anspruch 1 aufgeführten Merkmale gelöst. Der Vorteil dieser Formschließvorrichtung liegt darin, daß zwei getrennte Hydraulikkreisläufe für den schnellen Langhub und für den Press- bzw. Aufreißhub mit entsprechend reduzierten Ölmengen verwendet werden können. Hierdurch reduzieren sich die Umsteuerzeiten, die bisher notwendig waren, erheblich. Die erfindungsgemäße Vorrichtung eignet sich gut für standarisierte Unterbaunormalien und führt zu einer mit minimierten einfacheren Hydraulik mit günstigeren Kosten. Ebenfalls erleichtert die erfindunsgemäße Formschließvorrichtung die Montage, das Einfahren, die Demontage als auch die Wiedermontage. Die Formschließvorrichtung ist sowohl für Maschinen mit sehr langem Hub, als auch an Ausführungsformen mit Etagenwerkzeug (stack mould) oder Tandem-Maschinen verwendbar. Besonders drastisch wirkt sich das verminderte Füllvolumen des Hyrauliköls aus, was insbesondere im Hinblick auf die Umsteuerzeiten und die jeweils aufzuwendende Energie von erheblicher Bedeutung ist. Da das erfindungsgemäße System keine mechanischem Riegel- und Entriegelungsverzögerungen hat, können bis zu 5 Sekunden pro Zyklus eingespart werden. In entsprechender Weise vermindern sich auch die Steuer- und Regelvorrichtungen, Pumpen für Hydraulikmittel, Dichtungen etc.. Kerngedanke der vorleigenden Erfindung sind Kopplungsriegel, die in entsprechende Ausnehmungen einer Mantelfläche des Druckkissenkolbens nach Beendigung der ersten schnellen Schließbewegung kurz vor dem eigentlichen Pressvorgang eingreifen.

Also Kopplungsriegel können sowohl ausfahrbare Bolzen oder Spreizelemente - jeweils in rotationssymmetrischer Anordnung -verwendet werden. Insbesondere haben sich Spreizelemente in Form von an der Stange angelenkten Spreizklappen bewährt, deren rückwärtige Stirnseite mit der Presshubkraft des Kolbens beaufschlagbar ist, wobei die Kraft über die vordere Stirnseite der ausgeschwenkten Spreizklappe auf eine entsprechend ausgebildete Gegenfläche der Stange übertragbar ist. Der Spreizwinkel der Spreizklappen liegt bevorzugt zwischen 10 und 30 °, dementsprechend abgeschrägt sind die vorderen Stirnflächen der Spreizklappen.

Um mit konstruktiv geringstmöglichem Aufwand den Rückhub durchführen zu können, besitzt die Stange ferner einen ringförmigen Absatz, über dessen Stirnfläche die Rückhub- bzw. Aufreißkraft des Druckkissenkolbens übertragbar ist. Die Druckkisseneinrichtung besitzt vorzugsweise einen ringförmigen Kolbenbund, der den Zylinderraum des Druckkissens in zwei Teile teilte, die alternative zum Press- oder Rückhub des Kolbens mit einem Druckmediums beaufschlagbar sind (Anspruch 15).

Besitzen die Kopplungsreigel, vorzugsweise die Spreizklappen ein geringfügiges axiales Spiel gegenüber den Ausnehmungen des Kolbeninnenmantels, benötigt man nur geringe Kräfte zum Aus- bzw. Einschwenken der Klappen, da diese jeweils reibungsfrei in die Ausnehmungen einführbar sind.

Vorzugsweise werden die Spreizklappen jeweils über einen Gelenkhebelarm betätigt. Jeder Gelenkhebelarm ist nach einer Weiterbildung der Erfindung einerseits an einer Spreizklappe und andererseits an einem axial verschiebbaren Kolben angelenkt, was vorzugsweise über Schwenkbolzen realisiert wird. Durch diese Ausbildung können alle Spreizklappen über einen einzigen Kolben betätigt werden. Dieser Kolben kann mit seinem freien Ende den Stangengehäusedeckel druchragen und vorzugsweise als Postionsanzeige für die Spreizklappenstellung dienen.

Aus fertigungstechnischen Gründen ist die Ausnehmung für die Spreizklappen als Ringnut ausgebildet. Damit entfallen auch Justierprobleme der Stange im Hinblick auf den Kolben des Druckkissens. Vorzugsweise werden 6 äquidistante Spreizklappen verwendet, die elektromechanisch, pneumatisch oder hydraulisch betätigbar sind.

Nach einer Weiterbildung der Erfindung wird die Stange in einer Gleitbüchse des Druckkissenkolbens geführt, die beispielsweise aus einem selbstschmierenden Werkstoff bestehen kann.

Insbesondere soll die Stange längenveränderlich ausgebildet sein. In einer konkreten Ausführungsform wird dies dadurch realisiert, daß die Stange an ihrem der beweglichen Platte zugekehrten Ende als Hülse mit einem Innengewinde ausgebildet ist, in das eine mit der beweglichen Formträgerplatte verbundene Verstellschraube eingreift, Das Außengewinde der Verstellschraube greift wiederum in ein Schneckengetriebe eines an der beweglichen Platte angeflanschten Hydromotors ein. Ferner nimmt die bewegliche Platte eine feste Innenwelle als Ausrichtelement auf, die konzentrisch zu der genannten Verstellschraube und der Stange angeordnet ist und in Lagerbuchsen der Stange, der Verstellschraube und der beweglichen Platte gehaltert ist. Um die Stange gegen Rotationsbewegungen zu sichern, ist diese mit der Innenwelle über eine Keilnutverbindung gesichert.

Zur Minimierung des Presshubes ist vorgesehen, daß der Kolbenhub des Druckkissens 20, vorzugsweise zwischen 10 und 15 cm beträgt.

Ausführungsbeispiele der Erfindung sind in den Zeichnungen dargestellt: Es zeigen:

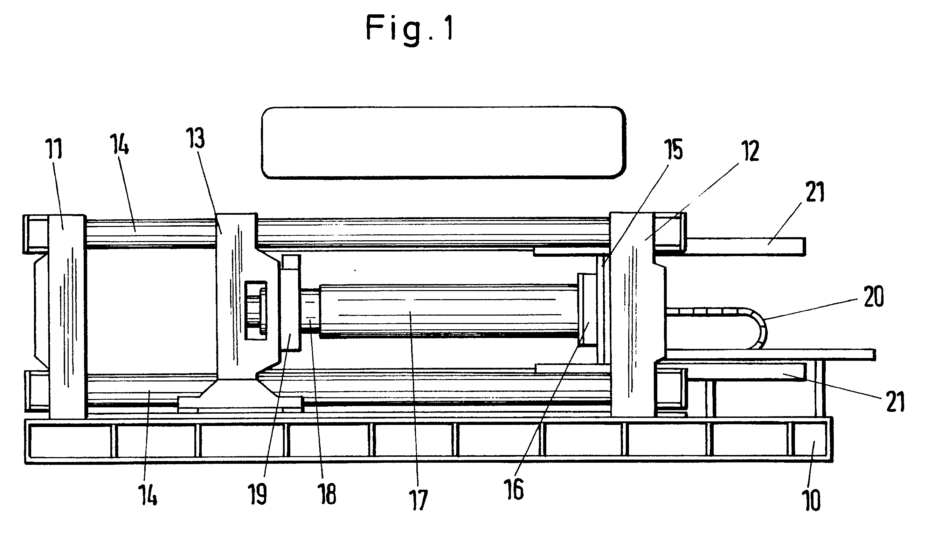

Fig. 1 die gesamte Schließvorrichtung in einer Seitenansicht,

Fig. 2 eine Teilansicht der Schließvorrichtung nach Fig. 1 mit Ansicht der längenveränderbaren Stange zwischen der beweglichen Platte und der zweiten ortsfesten Platte,

Fig. 3 eine Teilansicht der Spreizklappenanordnung der Stange und

Fig. 4 den längenveränderbaren Teil der Stange mit betreffenden Einrichtungen an der beweglichen Formträgerplatte.

Auf einem Rahmengestell 10 sind zwei im Abstand angeordnete ortsfeste Platten 11 und 12 angeordnet, zwischen denen eine weitere Platte 13 beweglich hin und her verfahrbar ist. Die jeweiligen nicht dargestellten Spritzformhälften befinden sich an den gegenüberliegenden Seiten der Platten 11 und 13 und können zum Spritzen aufeinander zu bzw. zur Entnahme des Spritzteils voneinander weggefahren werden. Dies geschieht entland zweier oder mehrerer Holme 14. Zur Durchführung des Presshubes dient ein Druckkissen, das aus einem Zylinder 15 und einem Kolben 16 besteht. Der Kolben 16 ist mitaufgebaut, wobei durch seinen Innenrohlraum eine Stange 17 axial verschiebbar ist, die fest mit der beweglichen Platte in Verbindung steht.

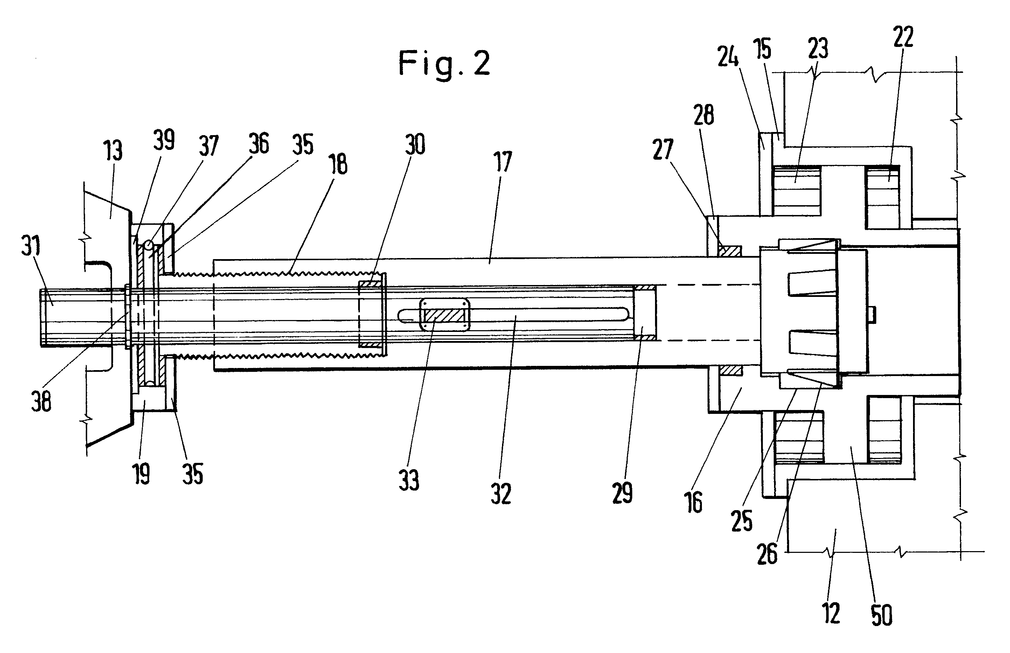

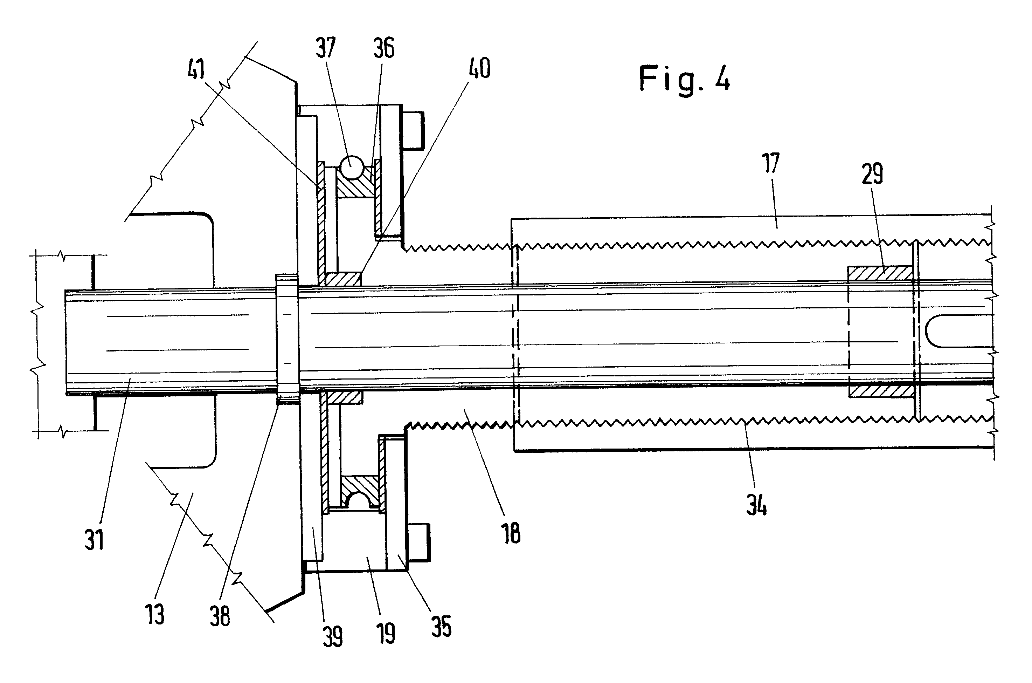

Um den Hub des Druckkissens verändern zu können, ist die Stange 17 längenveränderbar aufgebaut, wozu eine Verstellschraube 18 dient, die einerseits in ein Innengewinde der als Hülse ausgebildeten Stange 17 und andererseits in ein Gehäuse 19 eingreift. Das Druckkissen 15, 16 wird über einen Druckmittelzufluß 20 betätig wohingegen die Fahrkolben 21 einen hiervon getrennten Druckmitteldskreislauf besitzen. Einzelheiten der längenveränderbaren Stange 17 mit den Spreizklappen sind in den Figuren 2 bis 4 dargestellt.

Wie insbesondere aus Fig. 2 ersichtlich, ist an der ortsfesten Platte 12 der Zylinder 15 des Druckkissens angeordnet, in den ein Kolben 16 hin und her fahrbar ist. Dieser Kolben besitzt einen Ringbund 50, der den Zylinderraum teilt, und zwar in einen Zylinderraum 22, in den Druckmittel für den Presshub eingegeben wird und in einen Zylinderraum 23, in den Druckmittel für den Rückhub - das Aufreißen - eingegeben wird. Vorderseitig ist der Druckkissen-Zylinder 15 mit einem Deckel 24 verschlossen.

Der Kolben 16 ist ringförmig ausgebildet und besitzt an seiner Mantelinnenseite segmentartige Ausnehmungen oder eine als Ringnut 25 ausgebildete Ausnehmung. Ist der Langhub durch Ausfahren der Fahrkolben beendet, nimmt die Stange 17 als Verbindung zu beweglichen Platte 13 die in Fig. 2 dargestellte Lage ein, in der die mantelseitig angeordneten Spreizklappen 26 im Bereich der Ausnehmungen liegen. Die Stange 17 wird in einer Gleitbüchse 27 das Ringkolbens geführt, wobei die Gleitbüchse vorderseitig des Kolben durch einen Ringdeckel 28 abgedeckt bzw. befestigt ist. Die Stange 17 ist - zumindest an ihrer der beweglichen Platte 13 zugewandten Seite - als Hülse ausgebildet und mit einem Innengewinde versehen, in das eine Verstellschraube 18 eingeschraubt ist. Als Ausrichtelement dient eine mit dem beweglichen Platte fest verbundene Innenwelle 31, die durch die Hülse 18 greifend in die Stange 17 eingreift. Die Innenwelle besitzt eine Nut 32, worüber mit Hilfe eines durch die Stange 17 treibbaren Keiles 33 eine Verdrehsicherung der Stange 17 gewährleistet werden kann. Die Innenwelle wird über Gleitbüchsen 29, 30 in der Stange 17 gehalten. Die Verstellschraube 18 besitzt ein Außengewinde, das in ein Schneckengetriebe, bestehend aus einem Schneckenzahnrad 35 und Zwischenrad 36 - mittels eines Hydromotors 37 betreibbar ist. Der Hydromotor 37 ist in dem bereits erwähnten Gehäuse 19 angeordnet, das über einen Klemmflansch 39 sowie Klemmringe 38 und 41 an der beweglichen Platte befestigt ist. Zur Lagerung der Innenwelle 31 dient ferner eine im Gehäuse vorgesehene Führungsbuchse 40. Zur Veränderung der Länge der Stange 17 wird zunächst die Keil-Nut-Vergindung 32, 33 gelöst, anschließend über das Außengewinde 34 die Verstellschraube 18 über das Schneckensrad 35 und die Schneckelspindel am Motor betätigt, wobei die Schneckenspindel unter einem Selbsthemmungswinkel arbeitet bzw. der Elektro-oder Hydromotor eine Bremse besitzt.

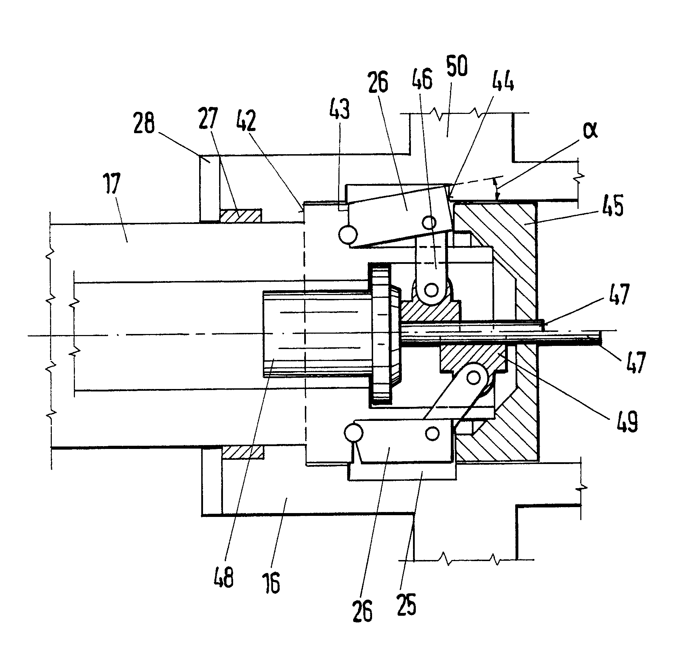

Der Mechanismus der Spreizklappen-Betätigung ist aus Fig. 3 ersichtlich, deren oberer Teil die Spreizklappe 26 im augeschwenkten und deren unterer Teil die Spreizklappe 26 im eingeschwenkten Zustand zeigt. Zur Betätigung der Spreizklappe ist eine Hydraulikzylinder 48 vorgesehen, dessen Kolben 47 axial verschiebbar ist. Über Anlenkungen 49 - im einfachsten Fall als Bolzenverbindung - ist der Kolben 47 mit einem Gelenkarm 46 verbunden, dessen anderes Ende gelenkig mit der Spreizklappe 26 verbunden ist. Die von der Stange 17 abschwenkbare Spreizklappe besitzt eine vordere abgeschrägte Stirnfläche 43, deren Abschrägungswinkel genau so groß ist, wie der in Fig. 3 dargestellte Schwenkwinkel α sein soll. Durch Einfahren des Kolbens 47 - siehe oberer Teil der Fig. 3 - wird der Gelenkarm 46 vertikal gestellt, so daß die vordere Stirnfläche 43 an einer entsprechenden Gegenfläche der Stange 17 zur Anlage kommt. Die rückseitige Stirnfläche 44 liegt dann im Bereich der rückseitigen Stirnwand der Ausnehmung 25 des Druckkissen-Kolbens 16, so daß beim Ausfahren des Kolben 16 die Kolbenhub-Kraft auf die Stirnseite 44, über die Spreizklappe und über die Stirnseite 43 auf die Stange übertragen wird.

Der Rückhub - das Aufreißen - wird ebenfalls über den Kolben 16 durchgeführt, und zwar dergestalt, daß in den Kolbenraum 23 ein Druckmittel eingegeben wird, so daß sich der Kolben 16 in Fig. 3 nach rechts bewegt. Hierbei kommt er an der ringförmigen Stirnseite 42 der Stange zur Anlage. Mit der Kraftübertragung auf die Stirnseite 42 der Stange 17 wird gleichzeitig die Stirnfläche 44 der Schwenkklappe 26 entlastet, die Schwenkklappe kann durch einen gleichzeitig ausgelösten Steuerimpuls eingefahren werden. Dies geschieht, wie in Fig. 3, unten dargestellt, dadurch, daß der Kolben 47 nach rechts bewegt wird, wodurch der Gelenkarm 46 in eine Schrägstellung unter gleichzeitigem Einfahren der Klappe 26 bewegt wird. Die Stange 17 ist an ihrem rückwärtigen Ende mit einem Gehäusedeckel 45 versehen, nach dessen Ablösen die Schwenkvorrichtung frei zugänglich ist.

## Ansprüche

1. Formschließvorrichtung für eine Spritzgießmaschine mit mindestens einer Spritzform, wobei jeweils eine erste Spritzformhälfte an einer ersten ortsfesten und eine zweite Spritzformhälfte an einer auf mindestens zwei Holmen zwischen der ersten ortsfesten und einer zweiten ortsfesten Platte bewegbaren Formträgerplatte mittels mindestens einer langhubigen Fahrzylinder-Kolben-Einrichtung zum Schnellen Öffnen und Schließen der betreffenden Spritzformhälften verschiebbar und die betreffenden Spritzformhälften unter hohem Druck mittels einer kurzhubigen Druckkissen-Einrichtung schließbar sind und mit radial zur Längsachse des Presskolbens der Druckkisseneinrichtung bewegbaren Kopplungsriegeln,
dadurch gekennzeichnet,
daß der Zylinder der Druckkissen-Einrichtung (15,16) an oder in der zweiten ortsfesten Platte (12) angeordnet und der Kolben (16) der Druckkissen-Einrichtung (15,16) ein Ringkolben (16) mit mindestens einer Ausnehmung (25) in seinem Innenmantel ist, daß in dem Kolbenhohlraum eine mit der beweglichen Formträgerplatte (13) fest verbundene Stange (17) axial beweglich gelagert ist, die radial in die Ausnehmung(en) (25) ein- bzw. auschwenkbare Kopplungsriegel (26) aufweist.

2. Formschließborrichtung nach Anspruch 1,
dadurch gekennzeichnet,
daß die Kopplungsriegel rotationssymmetrisch angeordnete, ausfahrbare Bolzen oder Spreizelemente (26) sind.

3. Formschließvorrichtung nach Anspruch 2,
dadurch gekennzeichnet,
daß die Spreizelemente an der Stange angelenkte Spreizklappen (26) sind, deren rückwärtige Stirnseite(n) (44) mit der Presshubkraft des Kolbens (16) beaufschlagbar sind, die über die vordere Stirnseite (43) der ausgeschwenkten Spreizklappe (26) auf eine entsprechend ausgebildete Gegenfläche der Stange (17) übertragbar ist.

4. Formschließborrichtung nach Anspruch 3,
dadurch gekennzeichnet,
daß die Spreizklappe (26) um einen Winkel (α) zwischen 10 und 20 ˙ abschwenkbar ist, wobei die Stirnfläche (47) um denselben Winkel (α) abgeschrägt ist.

5. Formschließvorrichtung nach einem dere Ansprüche 1 bis 4,
dadurch gekennzeichnet,

daß die Stange (17) einen ringförmigen Absatz (42) aufweist, über dessen Stirnfläche die Rückhub-(Aufreiß)-Kraft des Druckkissenkolbens (16) übertragbar ist.

6. Formschließvorrichtung nach Anspruch 5,
dadurch gekennzeichnet,
daß die Ausnehmungen (25) des Kolbeninnenmantels gegenüber den ausgefahrenen Kopplungsriegeln, vorzugsweise den Spreizklappen (26), eine geringfügiges axiales Spiele aufweisen.

7. Formschließvorrichtung nach einem der Ansprüche 1 bis 6,
dadurch gekennzeichnet,
daß die Spreizklappen (26) jeweils über einen Gelenkhebelarm (46) betätigbar sind.

8. Formschließvorrichtung nach Anspruch 7,
dadurch gekennzeichnet,
daß der Gelenkhebelarm (46) an der Spreizklappe (26) einerseits und an einem axial verschiebbaren Kolben (47) andererseits angelenkt ist, vorzugsweise mittels Gelenkbolzen.

9. Formschließvorrichtung nach Anspruch 8,
dadurch gekennzeichnet,
daß der Kolben (47) mit seinem freien Ende den Stangengehäusedeckel (45) durchragt und vorzugsweise als Postiionsanzeige für die Spreizklappenstellung dient.

10. Formschließvorrich nach einem der Ansprüche 1 bis 8,
dadurch gekennzeichnet,
daß die Ausnehmung als Ringnut (25) ausgebildet ist.

11. Formschließvorrichtung nach einem dere Ansprüche 1 bis 10,
dadurch gekennzeichnet,
daß vorzugsweise sechs Spreizklappen (26) vorgesehen sind.

12. Formschließvorrichtung nach einem der Ansprüche 1 bis 11,
dadurch gekennzeichnet,
daß die Kopplungsriegel, vorzugsweise Spreizklappen (26) elektromechanisch, pneumatisch oder hydraulisch betätigbar sind.

13. Formschließvorrichtung nach einem der Ansprüche 1 bis 12,
dadurch gekennzeichnet,
daß die Stangen (17) in einer Gleitbuchse (27) des Druckkissenkolbens geführt ist.

14. Formschließborrichtung nach Anspruch 13,
dadurch gekennzeichnet,
daß die vorzugsweise aus zwei Ringhälften bestehende Gleitbuchse (27) aus selbstschmierendem Werkstoff besteht.

15. Formschließvorrichtung nach einem der Ansprüche 1 bis 14,
dadurch gekennzeichnet,
daß die Druckkissen-Einrichtung (15,16) einen ringförmigen Kolbenbund (50) aufweist, der den Zylinderraum (22,23) in zwei Teile teilt, die alternativ zum Press- oder Ruckhub des Kolbens (16) mit einem Druckmedium beaufschlagbar sind.

16. Formschließvorrichtung nach einem der Ansprüche 1 bis 15,
dadurch gekennzeichnet,
daß die Stange (19) längenveränderlich ausgebildet ist.

17. Formschließvorrichtung nach Anspruch 16,
dadurch gekennzeichnet,
daß die Stange (17) an ihrem der beweglichen Platte (13) zugekehrten Ende als Hülse mit einem Innengewinde (34) ausgebildet ist, in das eine mit der beweglichen Formträgerplatte (13) verbundene Verstellschraube (18) eingreift.

18. Formschließvorrichtung nach Anspruch 17,
dadurch gekennzeichnet,
daß in das Außengewinde der Verstellschraube (18) ein Schneckengetriebe (35, 36)-eines an der beweglichen Platte (13) angeflanschten Hydromotors (37) eingreift.

19. Formschließvorrichtung nach einem der Ansprüche 16 bis 18,
dadurch gekennzeichnet,
daß die bewegliche Platte (13) eine fest Innenwelle (31) als Ausrichtelement aufnimmt, die konzentrisch zu der Verstellschraube (18) und der Stange (17) angeordnet ist, und in Lagerbuchsen (40,30,29) der Stange (17,) der Verstellschraube (18) und der beweglichen Platte (13) gehalten ist.

20. Formschließvorrichtung nach einem der Ansprüche 16 bis 19,
dadurch gekennzeichnet,
daß die Innenwelle (31) mit der Stange (17) über eine Keil-Nut-Verbindung (33,32) gegen Rotationsbewegungen gesichert ist.

21. Formschließvorrichtung nach einem der Ansprüche 1 bis 20,
dadurch gekennzeichnet,
daß der maximale Kolbenhub des Druckkissens (15,16) 20 cm, vorzugsweise 10 bis 15 cm beträgt.

# Fig.1

EP 0 421 088 A2

# Fig. 2

EP 0 421 088 A2

Fig. 4